Europäisches Patentamt

European Patent Office

Office européen des brevets

(11) Veröffentlichungsnummer: **0 268 234 B1**

(12) **EUROPÄISCHE PATENTSCHRIFT**

(45) Veröffentlichungstag der Patentschrift: **02.09.92**

(51) Int. Cl.⁵: **G02B 7/00**, G02B 7/18

(21) Anmeldenummer: **87116809.2**

(22) Anmeldetag: **13.11.87**

(54) **Halterung für ein optisches Element.**

(30) Priorität: **18.11.86 DE 3639358**

(43) Veröffentlichungstag der Anmeldung:
**25.05.88 Patentblatt 88/21**

(45) Bekanntmachung des Hinweises auf die
Patenterteilung:
**02.09.92 Patentblatt 92/36**

(84) Benannte Vertragsstaaten:
**BE CH DE FR GB IT LI NL SE**

(56) Entgegenhaltungen:
**DE-A- 2 707 043**
**DE-B- 2 042 350**
**DE-U- 1 708 630**
**US-A- 3 565 515**
**US-A- 4 139 270**

(73) Patentinhaber: **SIEMENS AKTIENGESELL-
SCHAFT**
**Wittelsbacherplatz 2**
**W-8000 München 2(DE)**

(72) Erfinder: **Zapp, Wolfgang, Dipl.-Ing. (FH)**
**Hans-Fallada-Strasse 12**
**W-8044 Unterschleissheim(DE)**

EP 0 268 234 B1

# Beschreibung

Die Erfindung betrifft eine Halterung mit einem in einen Strahlengang einer optischen Anordnung einfügbaren optischen Element, insbesondere für einen Reflektorspiegel eines Laserresonators, mit einem Träger, an dem das optische Element mittels Federkraft fixiert ist.

Optische Elemente, wie z. B. Reflektorspiegel eines Laserresona-tors, werden oft dadurch in einer Fassung gehalten, daß sie in einen Träger eingesetzt und in diesem festgeklebt oder mittels eines Klemmelementes in Richtung der optischen Achse fixiert werden. Eine derartige Halterung ist z. B. aus der DE-OS 31 30 399 für den Auskoppelspiegel eines Laserresonators bekannt. Hierbei ist zur Klemmung ein Schraubverschluß vorgesehen, wobei im Klemmbereich zwischen dem Schraubverschluß und dem optischen Element noch geeignete Andrück- und Dichtungselemente vorgesehen sind. Das optische Element ist dabei leicht montierbar und aus-wechselbar in dem Träger gehalten. Bei Halterungen mit einem Schraubverschluß ist aber wie bei Klebe- oder Kittverbindungen die Gefahr einer Verunreinigung der Umgebung des optischen Elementes gegeben, so daß derartige Halterungen für bestimmte Anwendungsfälle, in denen eine unbedingte Reinhaltung der Umgebung des optischen Elementes erforderlich ist, wie z. B. bei Gaslasern, weniger gut geeignet sind. Außerdem beanspruchen derartige Halterungen einen größeren Einbauraum seitlich und/oder in Richtung der optischen Achse des Elementes.

Es sind auch Halterungen für optische Elemente bei Laserresonatoren bekannt, bei denen das Klemmelement für das optische Element lediglich aus einer Feder besteht. Die DE-AS 20 42 350 zeigt einen Gaslaser, bei dem ein Resonatorspiegel mit einer in einer Hülse gehalterten Feder in der Hülse fixiert wird. Dabei stützt sich die auf den Spiegel zu gewölbte Feder mit ihrem Rand an der Innenwand der Hülse ab, während der gewölbte und mit einer zentralen Durchtrittsöffnung versehene Bereich gegen den Spiegel drückt. Abgesehen davon, daß auch bei einer derartigen Spiegelhalterung die Klemmfeder einen relativ großen Einbauraum außerhalb der Spiegelabmessungen beansprucht, üben derartige direkt gegen den Spiegel drückende Klemmelemente auch ein Biegemoment auf den Spiegel aus.

Der Erfindung liegt daher die Aufgabe zugrunde, eine Halterung der eingangs genannten Art so auszubilden, daß bei definierter Andrückkraft und möglichst geringem Platzbedarf eine universelle Verwendbarkeit der Halterung gegeben ist und auf das optische Element keine Biegemomente einwirken.

Diese Aufgabe wird durch die Halterung nach Anspruch 1 gelöst.

Bei einer derartigen Halterung wird das optische Element mittels Federkraft über eine Dreipunktlagerung an einem Träger fixiert. Dabei sind die Halterungselemente innerhalb der Außenkontur des optischen Elementes platzsparend angeordnet, so daß seitlich außerhalb des optischen Elementes überhaupt kein Einbauraum beansprucht wird. Der Platzbedarf in Richtung der optischen Achse des optischen Elementes ist sehr gering, da sich die einzelnen Halterungselemente sehr klein ausführen lassen. Die Ausbildung und Anordnung der Dreipunktlagerung und -fixierung hat außerdem noch den wesentlichen Vorteil, daß keine Biegemomente auf das optische Element eingeleitet werden, da sich die Kraftlinien innerhalb der Auflageflächen befinden. Die zum Andrücken des optischen Elementes an den Träger erforderliche Federkraft wird mit einer oder mit zwei Haltebuchsen auf das optische Element aufgebracht. Auf diese Weise erhält man eine definierte Andrückkraft. Eine derartige Halterung ergibt somit eine dauerhaft und ausreichend sichere Befestigung des optischen Elementes. Darüber hinaus stellt die erfindungsgemäße Halterung eine Befestigungseinrichtung ohne Schraubverschlüsse, Kitt- oder Klebeverbindungen dar, so daß sie auch bei hohen Reinhaltungsforderungen an die Umgebung des optischen Elementes einsatzfähig ist. Damit ist die Halterung unabhängig von den Umgebungs- und Einsatzbedingungen universell verwendbar und insbesondere zur Befestigung von Reflektorspiegeln bei Gaslasern besonders gut geeignet.

Zweckmäßigerweise ist an dem der Haltebuchse gegenüberliegenden Ende des Drahtstiftes eine Haltescheibe vorgesehen. Dabei ist mindestens ein Ende, vorzugsweise das Ende mit der Haltescheibe durch Umbiegen, Quetschen, Verlöten oder Verschweißen fixiert. Eine besonders hinsichtlich der Montage und der Demontage vorteilhafte Ausführungsform einer erfindungsgemäßen Halterung ergibt sich, wenn der Drahtstift an seinem mit der Haltebuchse ausgebildeten Ende mit einem Gewinde zum Aufschrauben mindestens einer gegen die Haltebuchse wirkenden Kontermutter ausgebildet ist. Diese Ausführung ist auch für Gaslaser geeignet, da hierbei ebenfalls kein Schraubverschluß erforderlich ist und nur wenige Gewindegänge am Ende des Drahtstiftes benötigt werden.

Eine bevorzugte Ausführungsform einer erfindungsgemäßen Halterung ist so gestaltet, daß zwei mit ihrer offenen Seite ineinandersteckbare, topfförmige Haltebuchsen, nämlich eine Außenbuchse und eine die Andrückfeder aufnehmende Innenbuchse, vorgesehen sind. Auf diese Weise ergibt sich eine sichere Führung der Andrückfeder in den Haltebuchsen. Außerdem wird eine direkte Anlage des Federendes an der Oberfläche des optischen Elementes vermieden.

Hinsichtlich des Ausgleichs eventueller Wärmedehnungseinflüsse ist es vorteilhaft, wenn die Andrückfeder derart in der Haltebuchse bzw. in der Innenbuchse gespannt ist, daß zwischen der Haltebuchse und dem optischen Element ein kleiner Spalt gebildet ist.

Weitere vorteilhafte Ausgestaltungen des Gegenstandes des Patentanspruches 1 sind in den übrigen Unteransprüchen angegeben.

Ausführungsbeispiele einer erfindungsgemäßen Halterung sind im folgenden anhand der Zeichnung näher beschrieben. Dabei zeigen die

FIG 1 und 2 in Vorderansicht bzw. in Draufsicht die Halterung eines optischen Elementes an einem Träger als solche,

FIG 3 das Prinzip einer ersten Ausführungsform der Halterung nach den Figuren 1 und 2 im Schnitt,

FIG 4 das Prinzip einer zweiten Ausführungsform ebenfalls im Schnitt,

FIG 5 die Ausbildung eines Spiegels bei einer Spiegelanordnung nach Figur 6.

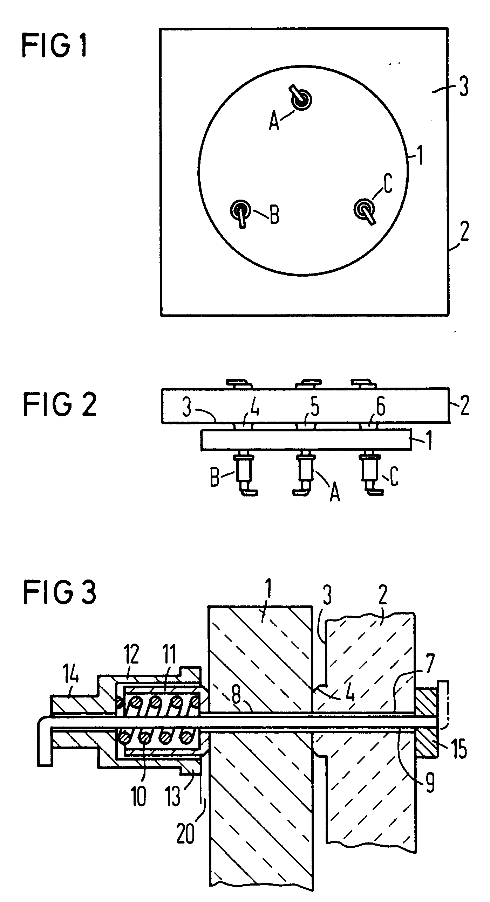

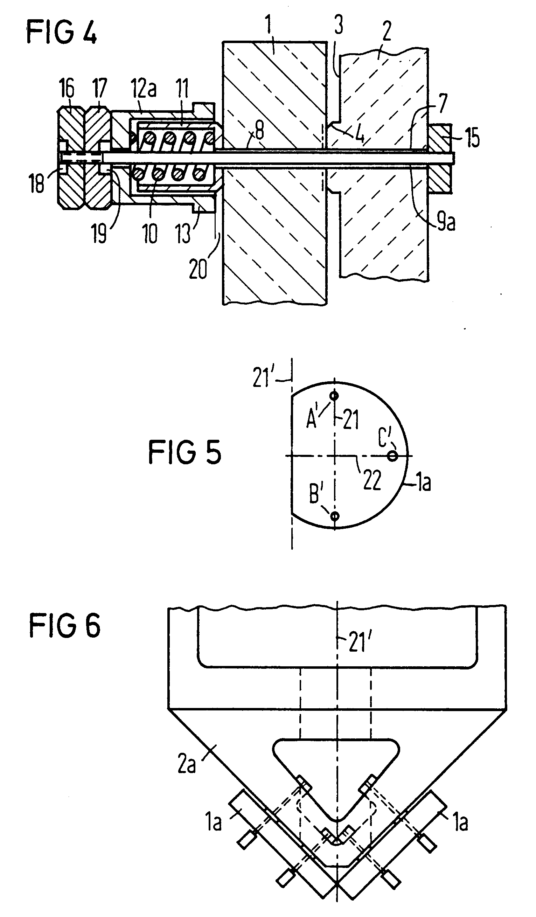

Die Halterung ist nach den Figuren 1 und 2 so aufgebaut, daß das z. B. als Reflektorspiegel eines Laserresonators ausgebildete optische Element 1 über eine Dreipunktlagerung A, B, C an einem plattenförmigen Träger 2 fixiert ist. Dieser besteht zweckmäßigerweise aus einem Material mit einem sehr niedrigen Wärmeausdehnungskoeffizienten, z. B. aus Glaskeramik und bildet z. B. einen Rahmen oder eine Trägerplatte eines Resonatorgehäuses. Die Dreipunktlagerung A, B, C ist im Randbereich des optischen Elementes 1 an den Ecken eines Dreiecks gebildet, wobei die Eckpunkte A, B und C auf einem Kreis liegen und hier in Umfangsrichtung einen gegenseitigen Abstand von z. B. 120° haben. Zur Auflage des optischen Elementes 1 ist die Auflagefläche 3 des Trägers 2 an den Eckpunkten A, B, C mit drei erhabenen Auflagepunkten 4, 5 und 6 ausgebildet, deren dem optischen Element 1 zugewandte Oberfläche eben ausgebildet ist, wobei die Oberfläche der drei Auflagepunkte 4, 5 und 6 in ein und derselben Ebene liegt und jeweils eine Fläche von etwa 9 - 13 mm$^2$ hat. Die Auflagepunkte 4, 5 und 6 sind rund oder rechteckig geformt und haben dann einen Durchmesser von etwa 4 mm bzw. eine lichte Außenweite von z. B. 3 × 3 mm. Im einzelnen ist die Halterung in der in Figur 3 oder Figur 4 dargestellten und im folgenden näher beschriebenen Weise aufgebaut. Der Träger 2 und das optische Element 1 selbst sind in gleicher Weise an den Eckpunkten A, B, C jeweils mit einer Bohrung 7 bzw. 8 für einen Drahtstift 9 bzw. 9a versehen, der eine Art Aufsteckdorn für die der Halterung und Klemmung des optischen Elementes 1 dienenden Bauteile bildet. Diese Bauteile bestehen bei der Ausführungsform nach Figur 3 und 4 aus einer als Schraubenfeder ausgebildeten Andrückfeder 10 und zwei topfförmigen zylindrischen Haltebuchsen 11 und 12 bzw. 12a, die mit ihrer offenen Seite ineinander steckbar sind. Die kleinere Haltebuchse 11 nimmt als Innenbuchse die Andrückfeder 10 auf, während die Außenbuchse 12 bzw. 12a die Innenbuchse 11 umhüllt und zum Spannen der Andrückfeder 10 dient. Die Außenbuchse 12, 12a ist bei beiden Ausführungsformen an der offenen, dem optischen Element 1 zugewandten Seite mit einem Flansch 13 versehen und bei der Ausführungsform nach Figur 3 am anderen Ende mit einem zylindrischen Ansatz 14 ausgebildet. Anstelle der Innenbuchse 11 kann gegebenenfalls auch ein scheibenförmiges Bauteil zwischen der Andrückfeder 10 und dem optischen Element 1 eingefügt werden.

Der zur Aufnahme der Bauteile 10, 11, 12 und 12a dienende, durch die Bohrungen 7 und 8 des Trägers 2 bzw. des optischen Elementes 1 steckbare Drahtstift 9, 9a hat einen Durchmesser von 0,5 - 1 mm, hier z. B. von 0,8 mm, während die Bohrungen 7 und 8 im Hinblick auf einen Temperaturausgleich etwas größer ausgelegt sind. Der durch die Bohrungen 7, 8 gesteckte Drahtstift 9, 9a ist nach dem Spannen der Andrückfeder 10 an seinen Enden fixiert. Hierzu ist an dem der Haltebuchse 12 bzw. 12a gegenüberliegenden Ende des Drahtstiftes eine Haltescheibe 15 vorgesehen, wobei bei der Ausführungsform nach Figur 4 das Drahtende mit der Haltescheibe verlötet oder verschweißt ist, während bei der Ausführungsform nach Figur 3 das über die Haltescheibe 15 vorstehende Drahtende durch Umbiegen und gegebenenfalls zusätzliches Verschweißen fixiert ist. Bei der Ausführungsform nach Figur 3 ist auch das andere, aus der Haltebuchse 12 vorstehende Drahtende durch Umbiegen und gegebenenfalls Verschweißen mit dem Ansatz 14 fixiert. Dagegen ist bei der Ausführungsform nach Figur 4 das aus der Haltebuchse 12a vorstehende Drahtende mit einem Gewinde, d.h. mit einigen wenigen Gewindegängen z. B. über eine Drahtlänge von 2 mm, zum Aufschrauben mindestens einer gegen die Haltebuchse 12a wirkenden Kontermutter ausgebildet. Hier sind zwei Kontermuttern 16, 17 vorgesehen, die an ihren einander abgekehrten Seiten jeweils mit einer zentralen Ausnehmung 18 bzw. 19 versehen sind, um mit möglichst wenigen Gewindegängen auf dem Drahtende auszukommen.

Das Spannen der z. B. mit etwa 1 kp Federkraft ausgestatteten Andrückfeder 10 erfolgt mit Hilfe der Haltebuchse 12 bzw. 12a, die dabei soweit gegen die Andrückfeder geschoben wird, daß zwischen dem Flansch 13 der Haltebuchse 12, 12a und dem optischen Element 1 ein kleiner Spalt 20 von etwa 0,02 mm zum Ausgleich des Temperaturganges gebildet ist. Nach dem Spannen der Andrückfeder 10 mittels der Haltebuchse 12, 12a wird das aus der Haltebuchse vorstehende Drahtende fixiert. In diesem Zustand ist das optische Element 1 an den drei Eckpunkten A, B, C mittels der in den Eckpunkten gelagerten Andrückfedern gegen die Auflagepunkte 4, 5 und 6 des Trägers gedrückt.

Die Halterung besteht aus sehr klein ausgebildeten Bauteilen, wobei die Gesamtlänge auf Seiten der Haltebuchse 12, 12a etwa 7 mm und deren Durchmesser etwa 4 mm ist, während die Haltescheibe 15 einen Durchmesser von etwa 3 - 4 mm und eine Dicke von etwa 1 mm hat. Der Platzbedarf für den Einbau der Halterung ist daher sehr gering, wobei seitlich außerhalb der Kontur des optischen Elementes überhaupt kein Einbauraum erforderlich ist.

FIG 5 zeigt die Ausbildung eines weiteren als Spiegel ausgebildeten optischen Elementes 1a mit einer zur Figur 1 unterschiedlichen Anordnung der Eckpunkte. Diese Ausführungsform wird insbesondere dann angewandt, wenn - wie in Figur 6 - zwei Spiegel 1a im Winkel von 90° in der dargestellten Weise im Eckbereich eines gemeinsamen prismatischen Trägers 2a vorgesehen sind. Dabei sind zwei Eckpunkte, nämlich die Eckpunkte A' und B' auf einer ersten Mittelachse 21 des optischen Elementes 1a und der dritte Eckpunkt C' auf einer zu der ersten Mittelachse 21 senkrechten zweiten Mittelachse 22 auf einem Kreis und an den Ecken eines Dreiecks liegend angeordnet. Hierbei ist es zweckmäßig, wenn die Bohrungen im optischen Element 1a und im Träger 2a für die Eckpunkte A' und B' in ihrem Durchmesser etwa dem Durchmesser des Drahtstiftes 9 entsprechen, während die Bohrung für den Eckpunkt C' zwecks Temperaturgangausgleich etwa dem 1,5-fachen Durchmesser des Drahtstiftes entspricht.

Bei einer Anordnung nach den Figuren 5 und 6 sind die Eckpunkte A' und C' sowie B' und C' in einem gegenseitigen Abstand von jeweils 90° angeordnet. Dabei ist es abweichend von der Darstellung in den Figuren 5 und 6 insbesondere dann, wenn der Träger 2a und die optischen Elemente 1a aus unterschiedlichen Materialien bestehen und somit verschiedene Wärmeausdehnungskoeffizienten aufweisen, zweckmäßig, die Eckpunkte A' und B' möglichst nahe einer Mittellinie 21' der optischen Anordnung vorzusehen.

**Patentansprüche**

1. Halterung mit einem in einen Strahlengang einer optischen Anordnung einfügbaren optischen Element (1), insbesondere für einen Reflektorspiegel eines Laserresonators, mit einem Träger (2), an dem das optische Element (1) mittels Federkraft fixiert ist, **dadurch gekenn-** **zeichnet,** daß der Träger (2) und das optische Element (1) mit drei gleichen, an den Eckpunkten (A, B, C) eines gedachten Dreiecks angeordneten Bohrungen (7 bzw. 8) versehen sind, daß eine der Auflage des optischen Elementes (1) dienende Fläche (3) des Trägers (2) an jedem dieser Eckpunkte (A, B, C) mit einem erhabenen Auflagepunkt (4, 5, 6) ausgebildet ist, daß für jeden der Eckpunkte (A, B, C) eine als Schraubenfeder ausgebildete Andrückfeder (10) vorgesehen ist, die in mindestens einer topfförmigen Haltebuchse (11, 12) aufgenommen und zusammen mit der Haltebuchse auf einem durch die Bohrungen (7 bzw. 8) des Trägers (2) und des optischen Elementes (1) gesteckten Drahtstift (9) angeordnet ist, daß der durch diese Bohrungen und die Andrückfedern (10) gesteckte Drahtstift (9) nach Spannen der Andrückfeder (10) an seinen Ecken fixiert ist und daß das optische Element (1) an den drei Eckpunkten (A, B, C) mittels der über die Haltebuchsen (11, 12) gespannten Andrückfedern (10) gegen die Auflagepunkte (4, 5, 6) des Trägers (2) gedrückt ist.

2. Halterung nach Anspruch 1, **dadurch gekenn-** **zeichnet,** daß die Eckpunkte (A, B, C) im Randbereich des optischen Elementes (1) angeordnet sind.

3. Halterung nach Anspruch 1 oder 2, **dadurch gekennzeichnet,** daß die Eckpunkte (A, B, C) im Abstand von 120° voneinander angeordnet sind.

4. Halterung nach Anspruch 1 oder 2, **dadurch gekennzeichnet,** daß zwei Eckpunkte (A', B') auf einer ersten Mittelachse (21 bzw. 21') des optischen Elementes (1a) oder der optischen Anordnung und der dritte Eckpunkt (C') auf einer zu der ersten Mittelachse (21) senkrechten zweiten Mittelachse (22) liegend angeordnet sind.

5. Halterung nach einem der Ansprüche 1 - 4, **dadurch gekennzeichnet,** daß die Bohrungen des Trägers (2a) und des optischen Elementes (1a) an zwei Eckpunkten (A', B') in ihrem Durchmesser etwa dem Durchmesser des Drahtstiftes (9) entsprechen und die Bohrung des Trägers (2) und des optischen Elementes (1a) am dritten Eckpunkt (C') in ihrem Durchmesser etwa dem 1,5-fachen Durchmesser des Drahtstiftes (9) entsprechend ausgebildet sind.

6. Halterung nach einem der vorhergehenden Ansprüche, **dadurch gekennzeichnet,** daß der Drahtstift (9) einen Durchmesser von etwa 0,5 - 1 mm aufweist.

7. Halterung nach einem der Ansprüche 1 - 6, **dadurch gekennzeichnet,** daß an dem der Haltebuchse (11, 12) gegenüberliegenden Ende des Drahtstiftes (9) eine Haltescheibe (15) vorgesehen ist.

8. Halterung nach einem der vorhergehenden Ansprüche, **dadurch gekennzeichnet,** daß mindestens ein Ende des Drahtstiftes (9) durch Umbiegen, Quetschen, Verlöten oder Verschweißen fixiert ist.

9. Halterung nach einem der vorhergehenden Ansprüche, **dadurch gekennzeichnet,** daß der Drahtstift (9a) an seinem mit der Haltebuchse (12a) ausgebildeten Ende mit einem Gewinde zum Aufschrauben mindestens einer gegen die Haltebuchse (12a) wirkenden Kontermutter (16, 17) ausgebildet ist.

10. Halterung nach einem der vorhergehenden Ansprüche, **dadurch gekennzeichnet,** daß zwei mit ihrer offenen Seite ineinander steckbare, topfförmige Haltebuchsen (11, 12) nämlich eine Außenbuchse (12) und eine die Andrückfeder (10) aufnehmende Innenbuchse (11), vorgesehen sind.

11. Halterung nach einem der vorhergehenden Ansprüche, **dadurch gekennzeichnet,** daß die Andrückfeder (10) derart in der Haltebuchse (12, 12a) bzw. in der Innenbuchse (11) gespannt ist, daß zwischen der Haltebuchse (12, 12a) und dem optischen Element (1) ein kleiner Spalt (20) gebildet ist.

12. Halterung nach einem der vorhergehenden Ansprüche, **dadurch gekennzeichnet,** daß die rund oder rechteckig ausgebildeten Auflagepunkte (4, 5, 6) des Trägers (2) eine Fläche von etwa 9 - 13 mm$^2$ haben.

13. Halterung nach einem der vorhergehenden Ansprüche **dadurch gekennzeichnet,** daß der Träger (2) zumindest in dem das optische Element (1) aufnehmenden Bereich plattenförmig ausgebildet ist.

### Claims

1. Mounting having an optical element (1) which can be inserted into a beam path of an optical arrangement, especially for a reflecting mirror of a laser resonator, having a carrier (2), to which the optical element (1) is fixed by means of spring force, characterised in that the carrier (2) and the optical element (1) are provided with three identical bores (7 and 8 respectively) disposed at the vertices (A, B, C) of an imaginary triangle, in that a surface (3) of the carrier (2), which surface serves as the bearing of the optical element (1), is formed at each of these vertices (A, B, C) with a raised bearing point (4, 5, 6), in that for each of the vertices (A, B, C) a pressure spring (10) designed as a helical spring is provided, which pressure spring is held in at least one cup-shaped retaining bush (11, 12) and, together with the retaining bush, is disposed on a wire pin (9) inserted through the bores (7 and 8 respectively) of the carrier (2) and of the optical element (1), in that the wire pin (9), inserted through these bores and the pressure springs (10), is fixed at its corners after stressing of the pressure spring (10), and in that the optical element (1) is pressed at the three vertices (A, B, C) against the bearing points (4, 5, 6) of the carrier (2) by means of the pressure springs (10) stressed via the retaining bushes (11, 12).

2. Mounting according to Claim 1, characterised in that the vertices (A, B, C) are disposed in the edge region of the optical element (1).

3. Mounting according to Claim 1 or 2, characterised in that the vertices (A, B, C) are disposed at a spacing of 120° from one another.

4. Mounting according to Claim 1 or 2, characterised in that two vertices (A', B') are disposed to lie on a first central axis (21 and 21' respectively) of the optical element (1a) or the optical arrangement, and the third vertex (C') is disposed to lie on a second central axis (22) perpendicular to the first central axis (21).

5. Mounting according to one of Claims 1 - 4, characterised in that the bores of the carrier (2a) and of the optical element (1a) at two vertices (A', B') correspond in their diameter approximately to the diameter of the wire pin (9), and the bore of the carrier (2) and of the optical element (1a) at the third vertex (C') are designed to correspond, in their diameter, approximately to 1.5 times the diameter of the wire pin (9).

6. Mounting according to one of the preceding claims, characterised in that the wire pin (9) exhibits a diameter of approximately 0.5 - 1 mm.

7. Mounting according to one of Claims 1 - 6, characterised in that a retaining disc (15) is provided at that end of the wire pin (9) which is opposite the retaining bush (11, 12).

8. Mounting according to one of the preceding claims, characterised in that at least one end of the wire pin (9) is fixed by bending over, pinching, soldering or welding.

9. Mounting according to one of the preceding claims, characterised in that the wire pin (9a) is formed, at its end formed with the retaining bush (12a), with a thread for screwing on at least one lock nut (16, 17) acting against the retaining bush (12a).

10. Mounting according to one of the preceding claims, characterised in that two cup-shaped retaining bushes (11, 12) which can be fitted into one another by their open side, namely an outer bush (12) and an inner bush (11) which holds the pressure spring (10), are provided.

11. Mounting according to one of the preceding claims, characterised in that the pressure spring (10) is stressed in the retaining bush (12, 12a) or in the inner bush (11) in such a manner that a small gap (20) is formed between the retaining bush (12, 12a) and the optical element (1).

12. Mounting according to one of the preceding claims, characterised in that the bearing points (4, 5, 6) of the carrier (2), which bearing points are designed to be round or rectangular, have a surface area of approximately 9 - 13 mm$^2$.

13. Mounting according to one of the preceding claims, characterised in that, at least in the region holding the optical element (1), the carrier (2) is designed to be plate-shaped.

## Revendications

1. Dispositif de fixation comportant un élément optique (1) pouvant être inséré dans un trajet du rayonnement d'un dispositif optique, notamment pour un miroir réflecteur d'un résonateur laser, présentant un support (2), auquel l'élément optique (1) est fixé au moyen de la force d'un ressort, caractérisé par le fait que le support (2) et l'élément optique (1) comportent trois perçages identiques (7 et 8) disposés aux sommets (A,B,C) d'un triangle imaginaire, qu'une surface (3) du support (2), qui sert à supporter l'élément optique (1), comporte, en chacun de ces sommets (A,B,C), un point d'appui surélevé (4,5,6), que pour chacun des sommets (A,B,C), il est prévu un ressort de pression (10), qui est réalisé sous la forme d'un ressort hélicoïdal, logé dans au moins une douille de retenue en forme de pot (11,12) et est disposé, conjointement avec la douille de retenue, sur une cheville (9) formée d'un fil, enfichée dans les perçages (7 et 8) du support (2) et de l'élément optique (1), que la cheville (9) formée d'un fil, enfichée dans ces perçages et dans les ressorts de pression (10), est fixée, après armement du ressort de pression (10), au niveau de ses extrémités et que l'élément optique (1) est repoussé, au niveau des trois sommets (A,B,C), contre les points d'appui (4,5,6) du support (2), au moyen des ressorts de pression (10) armés par l'intermédiaire des douilles de retenue (11,12).

2. Dispositif de fixation suivant la revendication 1, caractérisé par le fait que les sommets (A,B,C) sont situés dans la zone marginale de l'élément optique (1).

3. Dispositif de fixation suivant la revendication 1 ou 2, caractérisé par le fait que les sommets (A,B,C) sont disposés en étant décallées de 120° les uns des autres.

4. Dispositif de fixation suivant la revendication 1 ou 2, caractérisé par le fait que deux sommets (A',B') sont disposés sur un premier axe médian (21 ou 21') de l'élément optique (1a) ou du dispositif optique et que le troisième sommet (C') est situé sur un second axe médian (22) perpendiculaire au premier axe médian (21).

5. Dispositif de fixation suivant l'une des revendications 1-4, caractérisé par le fait que les perçages du support (2a) et de l'élément optique (1a) au niveau de deux sommets (A',B') ont un diamètre qui correspond approximativement au diamètre de la tige en forme de fil (9), que les perçages du support (2) ou de l'élément otique (1a) au niveau du troisième sommet (C') sont agencés de manière correspondante, de sorte que leur diamètre est égal approximativement à 1,5 fois le diamètre de la tige en forme de fil (9).

6. Dispositif de fixation suivant l'une des revendications précédentes, caractérisé par le fait que la tige en forme de fil (9) possède un diamètre égal à environ 0,5-1 mm.

7. Dispositif de fixation suivant l'une des revendications 1-6, caractérisé par le fait qu'un disque de retenue (15) est prévu sur l'extrémité, située à l'opposé de la douille de retenue (11,12), de la tige en forme de fil (9).

8. Dispositif de fixation suivant l'une des revendications précédentes, caractérisé par le fait qu'au moins une extrémité de la tige en forme de fil (9) est fixée par pliage, pincement, brasage ou soudage.

9. Dispositif de fixation suivant l'une des revendications précédentes, caractérisé par le fait que la tige en forme de fil (9a) comporte, au niveau de son extrémité comportant la douille de retenue (12a), un filetage permettant le vissage d'au moins un contre-écrou (16,17) s'appliquant contre la douille de retenue (12a).

10. Dispositif de fixation suivant l'une des revendications précédentes, caractérisé par le fait que sont prévues deux douilles de retenue en forme de pots (11) pouvant être enfichées l'une dans l'autre par leur côté ouvert, à savoir une douille extérieure (12) et une douille intérieure (11) logeant le ressort de pression (10).

11. Dispositif de fixation suivant l'une des revendications précédentes, caractérisé par le fait que le ressort de pression (10) est armé dans la douille de retenue (12,12a) ou dans la douille intérieure (11) de telle sorte qu'une petite fente (20) est formée entre la douille de retenue (12,12a) et l'élément optique (1).

12. Dispositif de fixation suivant l'une des revendications précédentes, caractérisé par le fait que les points d'application (4,5,6), réalisés avec une forme circulaire ou rectangulaire, du support (2) possèdent une surface d'environ 9-13 mm$^2$.

13. Dispositif de fixation suivant l'une des revendications précédentes, caractérisé par le fait que le support (2) est agencé en forme de plaque, au moins dans la zone qui loge l'élément optique (1).

FIG 1

FIG 2

FIG 3

**FIG 4**

**FIG 5**

**FIG 6**